# EUROPÄISCHE PATENTANMELDUNG

(11) **EP 2 365 140 A2**
(43) Veröffentlichungstag der Anmeldung: **14.09.2011**
(21) Anmeldenummer: 11156972.9
(22) Anmeldetag: 04.03.2011
(51) Int. Cl.: E03B 1/04, E03B 3/03, B01D 29/00, E03F 1/00

(54) **Filtervorrichtung für Dachablaufsysteme**

(30) Priorität: 05.03.2010 DE 102010010263
(71) Anmelder: Nordmeyer, Hans-Jörg, 73450 Heubach (DE)
(72) Erfinder: Nordmeyer, Hans-Jörg, 73450 Heubach (DE)
(74) Vertreter: Schmid, Wolfgang

(57) **Zusammenfassung**

Eine Filtervorrichtung (20) für Dachablaufsysteme (13) und/oder Oberflächenentwässerungen (14) weist einen Wasserbehälter (5) , in den ein Zulauf (1) für zu filterndes Wasser mündet und von dem ein Kanalablauf (2) zu einem Kanal (15) und wenigstens ein Nutzablauf (3) zu einem Wasserspeicher (16) abgeht, und einen in dem Wasserbehälter (5) angeordneten Filterkörper (4) auf. Der Zulauf (1) mündet in einen Innenraum (21) des Filterkörpers (4) und der wenigstens eine Nutzablauf (3) geht von einem sich außerhalb des Filterkörpers (4) befindlichen Bereich des Wasserbehälters (5) ab.

## Beschreibung

Die Erfindung betrifft eine Filtervorrichtung für Dachablaufsysteme und/oder Oberflächenentwässerungen sowie ein Verfahren zur Filterung von Wasser aus Dachablaufsystemen und/oder Oberflächenentwässerungen.

Eine Verwendung von Regenwasser zur weiteren Nutzung als Brauchwasser, z. B. WC-Spülung, Wäschewaschen usw., scheitert oft an den optischen und geruchsintensiven Verunreinigungen oder an dem hohen Wasserverlust beim Reinigungsversuch. Aus Gründen der Wirtschaftlichkeit und des Umweltschutzes wäre eine Steigerung der Verwendung des kostenlos zur Verfügung stehenden Regenwassers sinnvoll.

Organische Materialien, z. B. Blütenstaub, Blätter, Pflanzensamen usw., verstopfen sehr schnell jedes Filtermaterial. Somit geht ein Großteil des Regenwassers entweder durch zu feine Siebe oder durch gesättigte bzw. verstopfte Filter verloren.

Bei zu grobem Filtermaterial kommt es zum Eindringen von organischem Material in den Sammelbehälter mit anschließender Zersetzung und der damit verbundenen optisch nachteiligen und geruchsintensiven Verunreinigung des Sammelgutes.

Zurzeit verfügbare Filtersysteme für Regenwasser arbeiten überwiegend vertikal. Das verhindert eine oberflächennahe Verlegung von Rohrsystemen und Auffangbehältern und verursacht somit teure und arbeitsintensive bzw. tiefe Baumaßnahmen. Ein Austausch von Filtersieben ist meist nicht möglich, wenn diese fest verbaut sind oder an unzugänglichen Stellen liegen. Große Filtermatten oder Filtersysteme, die oft direkt in der Zisterne hängen, sind unhandlich und werden mit zunehmender Verschmutzung immer schwerer.

Ausgefiltertes Material bleibt oft bis zur nächsten Reinigung im Filter liegen und wird bei zunehmender Verrottung bzw. Zersetzung immer von nachlaufendem Wasser umspült und in den Sammelbehälter eingetragen. Regenwasser kann durch Umwelteinflüsse einen niedrigen pH-Wert besitzen, was negative und zerstörerische Eigenschaften auf Installationen oder Sanitärgegenstände zur Folge hat.

Es ist daher Aufgabe der vorliegenden Erfindung, eine Filtervorrichtung für Dachablaufsysteme und/oder Oberflächenentwässerungen und ein Verfahren zur Filterung Wasser aus Dachablaufsystemen und/oder Oberflächenentwässerungen zu schaffen, die die Nachteile des Standes der Technik umgehen und insbesondere eine Separation und Abscheidung von schwimmenden organischen Verunreinigungen vor der Filterung mit einem Feinfiltermedium ermöglichen.

Erfindungsgemäß wird diese Aufgabe durch die in Anspruch 1 genannten Merkmale gelöst.

Dadurch, dass erfindungsgemäß das aus dem Dachablaufsystem bzw. der Oberflächenentwässerung ablaufende Wasser in den Innenraum des, wie nachfolgend näher erläutert, stets im Wasser stehenden Filterkörpers geleitet wird und den Wasserspeicher nur durch den wenigstens einen sich außerhalb des Filterkörpers befindlichen Nutzablauf erreichen kann, kann ausschließlich gefiltertes Wasser zu dem Wasserspeicher gelangen.

Vorteilhafterweise füllt sich die erfindungsgemäße Filtervorrichtung stets vollständig mit Wasser und läuft nie trocken, so dass die über den Zulauf in die Filtervorrichtung gelangenden Verunreinigungen nicht an dem Filterkörper festkleben können, sondern stets oben schwimmen oder zumindest im Wasserbad gelöst sind und bei starkem Regen oder wenn der Wasserspeicher gefüllt ist, aus dem Filterkörper gespült werden.

Die erfindungsgemäße Filtervorrichtung eignet sich, um Dachablaufwasser oder Oberflächenwasser zu reinigen und dieses gereinigte Wasser für eine nachfolgende Bevorratung in geeigneten Sammelbehältern bzw. Wasserspeichern sowie die anschließende Verwendung als klares und nicht riechendes Brauchwasser oder zur weiteren Aufbereitung zu nutzen.

Durch die horizontale Anordnung der Rohranschlüsse und den minimalen Höhenversatz ist der Einbau in jede neue und auch in bereits bestehende Regenwassersammelanlagen möglich.

Auf einen eigenen Überlauf im Wasserspeicher kann verzichtet werden, da bei einem Rückstau in einem der Nutzabläufe das gesamte Wasser durch den Kanalablauf direkt zur Kanalisation durchfließt.

Durch die Abscheidung von organischen bzw. schwimmenden oder sich im Schwebezustand innerhalb des Filterkörpers befindlichen Verunreinigung vor der eigentlichen Filtration ergibt sich ein sehr geringer Reinigungsaufwand für die erfindungsgemäße Filtervorrichtung.

Die Verwendung des gereinigten Wassers ermöglicht einen Einsatz in Privathaushalten, gewerbliche Nutzung bis zur Nutzung für Industrie und Großverbrauchern als Brauchwasser und/oder zur weiteren Aufbereitung zur Trinkwassergewinnung.

Um sicherzustellen, dass das gefilterte Wasser vorzugsweise in den Wasserspeicher gelangen kann, kann in einer sehr vorteilhaften Weiterbildung der Erfindung vorgesehen sein, dass der wenigstens eine Nutzablauf in einer geringeren Höhe angeordnet ist als der Kanalablauf. Wenn der wenigstens eine Wasserspeicher voll ist oder bei sehr starkem Regen kann das Wasser den Wasserbehälter dennoch durch den Kanalablauf verlassen. In diesem Fall werden dann größere Verunreinigungen und Schwebestoffe in den Kanal gespült. Ein weiterer Vorteil dieser Lösung besteht darin, dass ein Leerlaufen des Wasserbehälters und damit auch des Filterkörpers und ein damit verbundenes Austrocknen aufgrund der Höhe des Kanalablaufs verhindert wird.

Um zu verhindern, dass der Filterkörper durch größere und auf dem Wasser schwimmende Verunreinigungen verstopft wird, kann des weiteren vorgesehen sein, dass der Filterkörper im oberen, dem Zulauf und dem Kanalablauf zugewandten Bereich seiner Seitenwände geschlossen ist und in seinem unteren, dem Zulauf und den Abläufen abgewandten Bereich seiner Seitenwände und/oder seines Bodens Filteröffnungen aufweist.

Wenn dabei vorgesehen ist, dass die Filteröffnungen ausschließlich am Boden des Filterkörpers vorgesehen sind, kann die erfindungsgemäße Filtervorrichtung verhältnismäßig einfach hergestellt werden.

In einer weiteren vorteilhaften Ausgestaltung der Erfindung kann vorgesehen sein, dass der Filterkörper in dem Bereich der Filteröffnungen mit einer Kalksplittschicht versehen ist. Durch eine derartige Kalksplittschicht wird der pH-Wert des über das Dachablaufsystem oder die Oberflächenentwässerung in den Wasserspeicher einströmenden Wassers erhöht, d. h. es wird dem sauren Regenwasser entgegengewirkt, wodurch Leitungen und sanitäre Gegenstände geschont werden, wenn das in den Wasserspeicher eingefüllte Wasser später als Brauchwasser im Haus genutzt wird.

Um auf zuverlässige Art und Weise zu verhindern, dass das in den Filterkörper einströmende Wasser in einen der Nutzabläufe gelangen kann, ohne zuvor den Filterkörper durchströmt zu haben, kann des weiteren vorgesehen sein, dass der Filterkörper eine mit einer umlaufenden Wandung des Wasserbehälters verbundene Abdeckung aufweist, unterhalb welcher der wenigstens eine Nutzablauf angeschlossen ist. Ein weiterer Vorteil dieser Lösung besteht darin, dass größere und kleinere Tiere, wie Ratten, Frösche oder Mäuse, nicht in den wenigstens einen Wasserspeicher gelangen können.

Dieser Schutz vor ungefiltert in einen der Wasserspeicher einströmendes Wasser kann dadurch erhöht werden, dass die Abdeckung gegenüber der umlaufenden Wandung des Wasserbehälters abgedichtet ist.

Eine weitere vorteilhafte Ausgestaltung der Erfindung kann darin bestehen, dass der Filterkörper ein über im wesentlichen seinen gesamten Querschnitt verlaufendes Grobsieb aufweist, welches unterhalb des Kanalablaufs angeordnet ist. Ein derartiges Grobsieb verhindert, dass größere Verunreinigungen tiefer in den Filterkörper eindringen können. Diese größeren Verunreinigungen werden dann beim nächsten stärkeren Regen aus dem Filterkörper heraus in den Kanalablauf gespült. Dies wird dadurch gewährleistet, dass das Grobsieb unterhalb des Kanalablaufs angeordnet ist.

Hierbei hat sich ein Abstand des Grobsiebs von dem Kanalablauf von 0,5 - 2 cm als sehr gut geeignet erwiesen.

Eine verfahrensgemäße Lösung der Aufgabe ergibt sich durch die Merkmale von Anspruch 10.

Mit diesem Verfahren lässt sich die erfindungsgemäße Filtervorrichtung besonders vorteilhaft nutzen.

Weitere vorteilhafte Ausgestaltungen und Weiterbildungen der Erfindung ergeben sich aus den Unteransprüchen und aus der nachfolgenden Beschreibung.

In den Zeichnungen zeigt:
- Fig. 1: eine Übersichtsdarstellung der erfindungsgemäßen Filtervorrichtung;
- Fig. 2: eine Seitenansicht der Filtervorrichtung in einer ersten Ausführungsform;
- Fig. 3: eine weitere Seitenansicht der Filtervorrichtung gemäß dem Pfeil III aus Fig. 2;
- Fig. 4: eine Draufsicht auf die Filtervorrichtung;
- Fig. 5: einen Schnitt nach der Linie V-V aus Fig. 3;
- Fig. 6: einen Schnitt nach der Linie V-V aus Fig. 3, in dem nur der Wasserbehälter zu erkennen ist;
- Fig. 7: einen Schnitt nach der Linie V-V aus Fig. 3, in dem nur der Filterkörper zu erkennen ist;
- Fig. 8: einen Schnitt nach der Linie VIII-VIII aus Fig. 2;
- Fig. 9: einen Schnitt nach der Linie VIII-VIII aus Fig. 2, in dem nur der Wasserbehälter zu erkennen ist;
- Fig. 10: einen Schnitt nach der Linie VIII-VIII aus Fig. 2, in dem nur der Filterkörper zu erkennen ist;
- Fig. 11: eine perspektivische Darstellung einer zweiten Ausführungsform der erfindungsgemäßen Filtervorrichtung;
- Fig. 12: einen Schnitt durch die Filtervorrichtung aus Fig. 11;
- Fig. 13: eine weitere perspektivische Darstellung der zweiten Ausführungsform der Filtervorrichtung;
- Fig. 14: eine weitere perspektivische Darstellung der zweiten Ausführungsform der Filtervorrichtung;
- Fig. 15: eine weitere perspektivische Darstellung der zweiten Ausführungsform der Filtervorrichtung;
- Fig. 16: einen Schnitt durch die Filtervorrichtung aus Fig. 15;
- Fig. 17: eine Draufsicht auf die zweite Ausführungsform der erfindungsgemäßen Filtervorrichtung; und
- Fig. 18: einen Schnitt nach der Linie XVIII-XVIII aus Fig. 17.

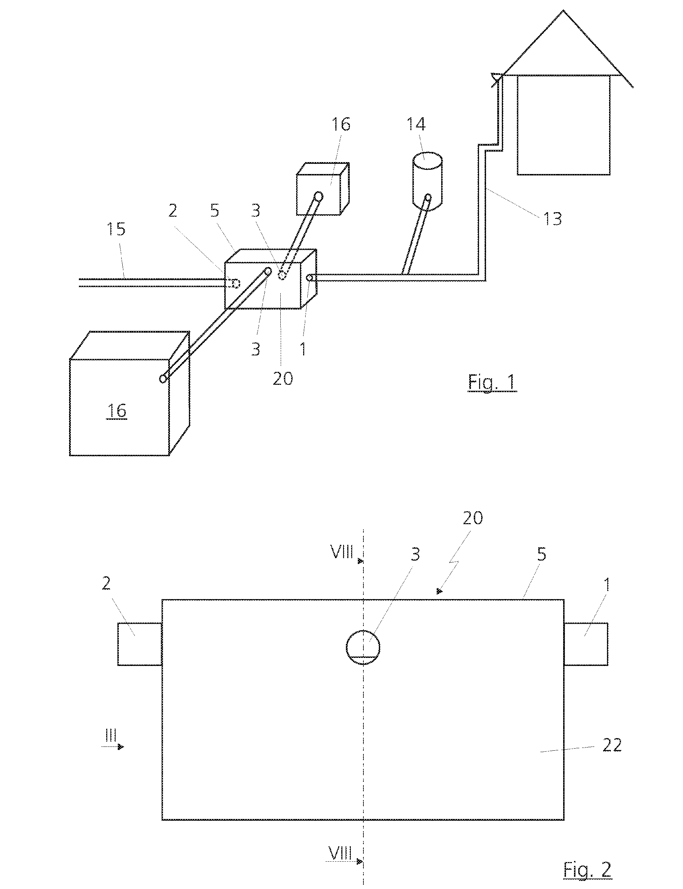

Nachfolgend werden eine Filtervorrichtung 20 und ein Verfahren zur Separation schwimmender Verunreinigungen und Filterung von Regenwasser aus einem Dachablaufsystem 13 und einer Oberflächenentwässerung 14, die in Fig. 1 dargestellt sind, beschrieben. Die Filtervorrichtung 20 wäre selbstverständlich auch zur Filterung von Wasser lediglich aus dem Dachablaufsystem 13 oder lediglich aus der Oberflächenentwässerung 14 geeignet. Die Filtervorrichtung 20 weist einen mit Wasser gefüllten Wasserbehälter 5 auf, in den, wie in Fig. 2 dargestellt, ein Zulauf 1 für das zu reinigende bzw. zu filternde Wasser mündet und dem gegenüber ein Kanalablauf 2 zu einem Kanal 15 und wenigstens ein Nutzablauf 3 zu einem Sammelbehälter bzw. Wasserspeicher 16 abgeht. Sowohl der Zulauf 1 als auch die Abläufe 2 und 3 befinden sich dabei in einem oberen Bereich des Wasserbehälters 5, wodurch ein Leerlaufen des Wasserbehälters 5 verhindert wird. Im vorliegenden Fall sind zwei Nutzabläufe 3 vorgesehen, die zu zwei separaten Wasserspeichern 16 führen. Es ist möglich, mehrere und/oder unterschiedliche Wasserspeicher 16 parallel an die Filtervorrichtung 20 anzuschließen. Selbstverständlich kann auch nur ein Nutzablauf 3 vorgesehen sein.

Die Nutzabläufe 3 zu den Wasserspeichern 16 liegen quer zur Strömung auf einer im wesentlichen gleichen horizontalen Ebene wie der Kanalablauf 2. Der Zulauf 1 und die Abläufe 2 und 3 sind horizontal angelegt und auf annähernd gleicher Ebene mit einem im Idealfall maximalen Höhenversatz von einem halben Rohrdurchmesser des Zulaufes 1.

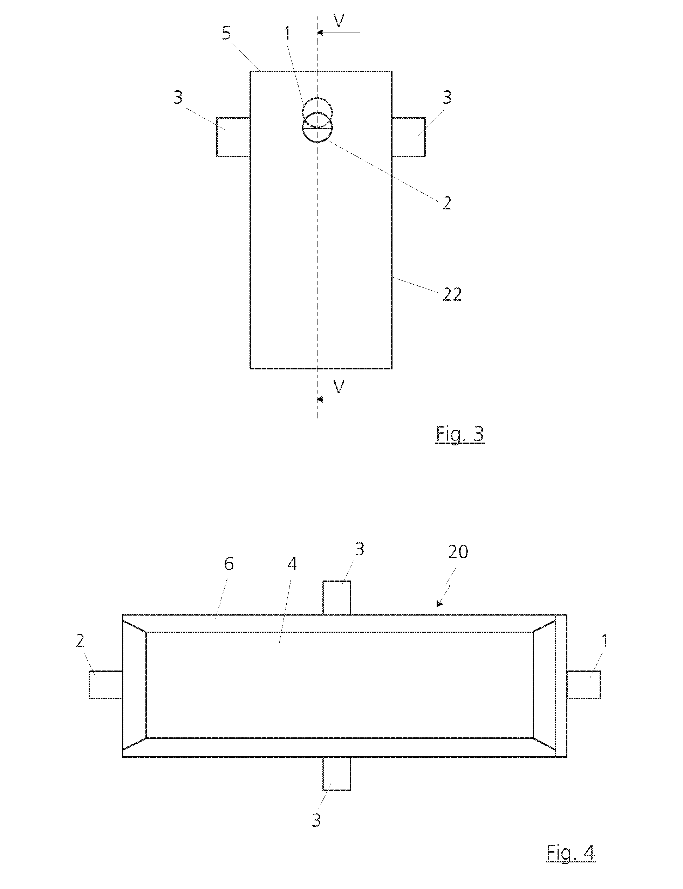

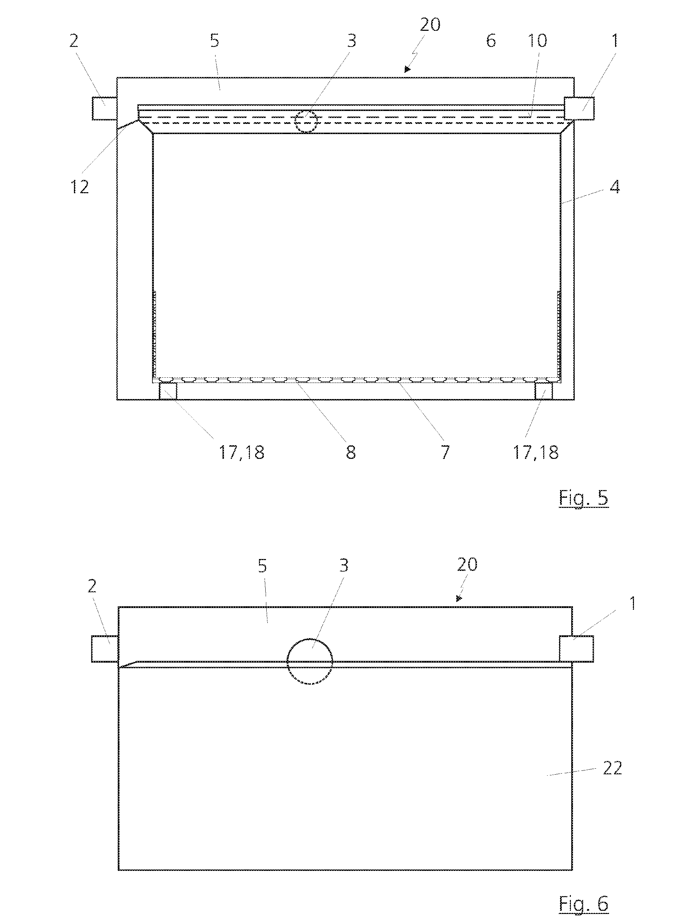

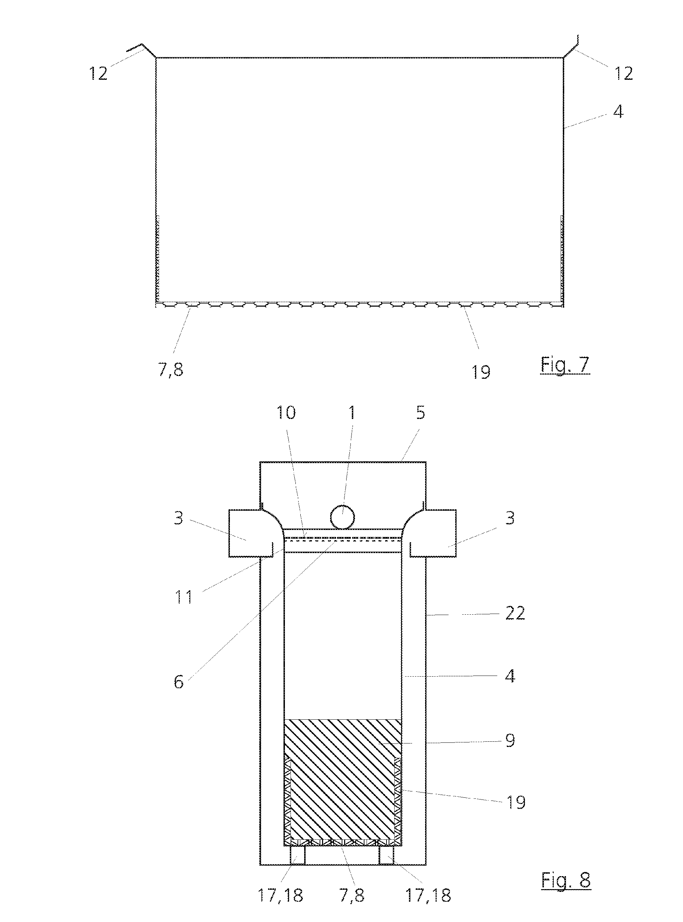

In dem mit Wasser gefüllten, eine umlaufende Wandung 22 aufweisenden Wasserbehälter 5 ist ein in den Figuren 4 und 5 zu erkennender und in Fig. 7 einzeln dargestellter Filterkörper 4 angeordnet, der, wie aus Fig. 5 hervorgeht, an seiner dem Wasserspeicher 16 zugewandten Seite erhöht und an seiner dem Kanalanschluss 2 zugewandten Seite niedriger ist. Im oberen Bereich des Filterkörpers 4 ist knapp unter der Wasseroberfläche 10, vorzugsweise in einem Abstand von 0,5 - 2 cm unter der Wasseroberfläche 10, ein als Lochblech ausgeführtes Grobsieb 6 angeordnet. Das Lochblech 6 dient dazu, ein zu tiefes Einsinken von größeren Objekten wie Fallobst, Samenkapseln, Nüsse, Kerne, Tiere usw. an der Wasseroberfläche 10 zu verhindern und ein Ausspülen dieser Objekte über den Kanalablauf 2 zu ermöglichen. In die Filtervorrichtung 20 einströmendem schwimmfähigen Material wird also der direkte Kontakt zu dem Filterkörper 4 wesentlich erschwert und dieses schwimmfähige Material kann an der Wasseroberfläche 10 in Richtung des Kanalablaufs 2 treiben, bis es durch die Strömung und eventuelle Wellen in den Kanalablauf 2 gespült bzw. gedrückt wird. Die Wasseroberfläche 10 innerhalb des Wasserbehälters 5 und somit auch innerhalb des Filterkörpers 4 ergibt sich aus der Höhe der Unterkante des wenigstens einen Nutzablaufs 3, da sämtliches Wasser oberhalb des wenigstens einen Nutzablaufs 3 durch denselben abströmt. Durch die beschriebenen Anordnung ist der Wasserbehälter 5 stets fast annähernd vollständig mit Wasser gefüllt. Das ca. 0,5 - 2 cm unterhalb des wenigstens einen Nutzablaufs 3 angeordnete Grobsieb 6 befindet sich damit immer im Wasser, sodass die von dem Grobsieb 6 zurückgehaltenen Verschmutzungen nicht im trockenen Zustand auf demselben liegen bleiben.

Der Zulauf 1 mündet direkt in einen Innenraum 21 des Filterkörpers 4, so dass gewährleistet ist, dass von dem Dachablaufsystem 13 oder der Oberflächenentwässerung 14 in die Filtervorrichtung 20 einströmendes Wasser in den Filterkörper 4 gelangt und auf die nachfolgend beschriebene Art und Weise gefiltert wird. Die beiden Nutzabläufe 3 gehen von einem sich außerhalb des Filterkörpers 4 befindlichen Bereich des Wasserbehälters 5 ab. Dadurch kann lediglich solches Wasser die Filtervorrichtung 20 verlassen, welches durch den Filterkörper 4 gefiltert wurde, da das Wasser durch den Filterkörper 4 strömen muss, um zu einem der Nutzabläufe 3 zu gelangen. Die beiden Nutzabläufe 3, allgemein der wenigstens eine Nutzablauf 3, ist in einer geringeren Höhe als der Kanalablauf 2 bzw. unterhalb des Kanalablaufs 2 angeordnet, so dass das gefilterte Wasser vorzugsweise durch die Nutzabläufe 3 in die Wasserspeicher 16 strömt und nicht durch den Kanalablauf 2 in den Kanal 15 verloren geht.

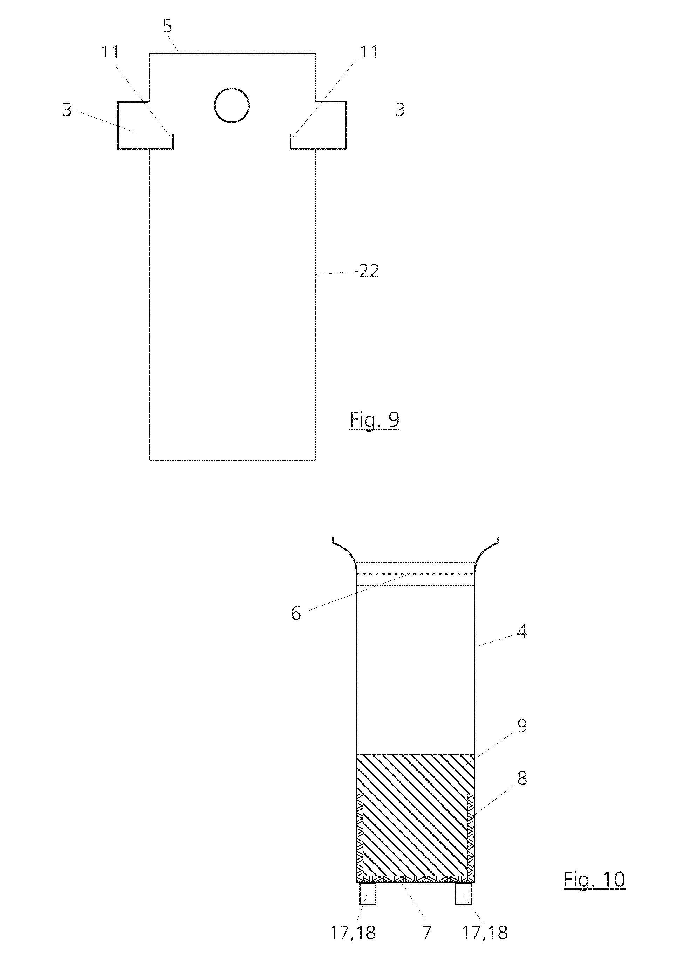

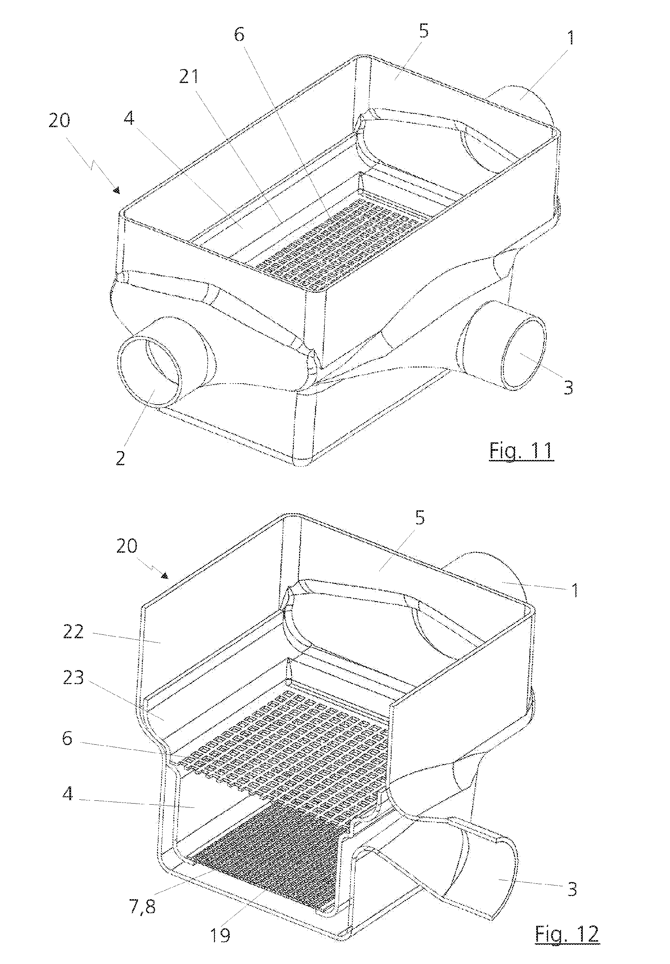

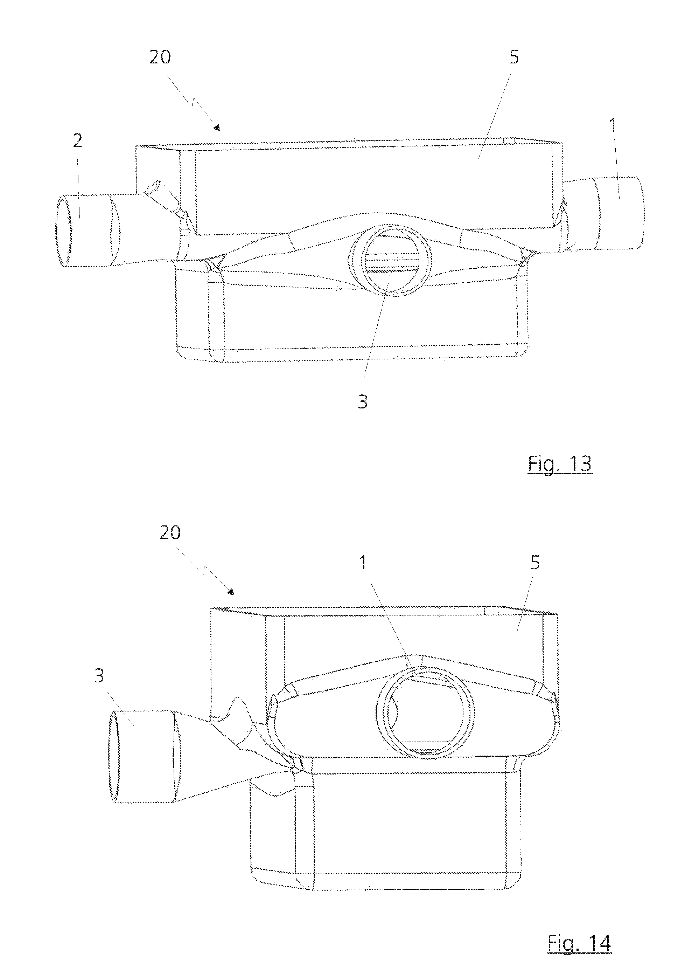

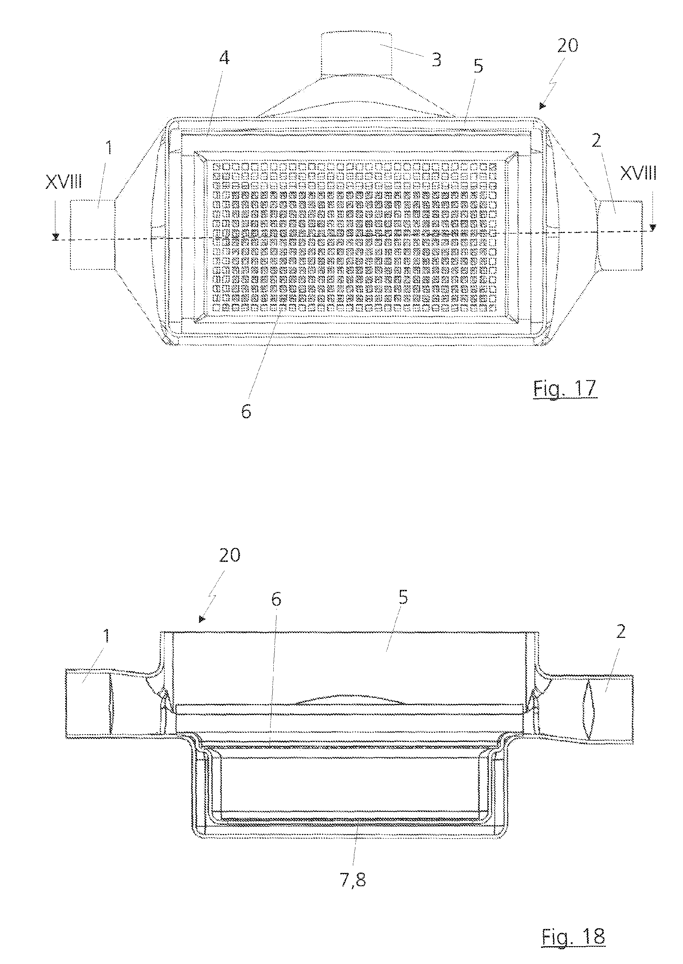

Des weiteren ist über dem Grund des Wasserbehälters 5 am Boden des Filterkörpers 4 ein Lochblech 7 als Auflage, Stützung und Halterung für einen in Form eines Feinsiebs, Flieses, Gitters oder dergleichen ausgebildeten Feinfilter 8 vorgesehen, auf dem im vorliegenden Fall eine Kalksplittschicht 9 aufliegt, auf die jedoch auch verzichtet werden könnte. Durch das Einfüllen einer Kalksplittschicht 9 in den Filterkörper 4 auf das Feinfilter 8 kann saurem Regenwasser entgegen gewirkt und der pH-Wert des Wassers erhöht werden, was Sanitärgegenstände und Installationen schont. Das Lochblech 7 und der Feinfilter 8 weisen Filteröffnungen 19 auf, durch welche das in den Innenraum 21 des Filterkörpers 4 einströmende Wasser denselben nach außerhalb des Filterkörpers 4 verlassen und damit in den Wasserbehälter 5 gelangen kann. In dem in den Figuren 1 bis 10 dargestellten Ausführungsbeispiel befinden sich auch in der seitlichen Wandung des Filterkörpers 4 die Filteröffnungen 19, wobei vorzugsweise die Kalksplittschicht 9 erst oberhalb der Filteröffnungen 19 endet, so dass das Wasser stets durch die Kalksplittschicht 9 strömen muss, um den Filterkörper 4 verlassen zu können. Prinzipiell ist dabei zu bevorzugen, dass, wie dargestellt, die umlaufende Wandung bzw. die Seitenwand des Filterkörpers 4 an ihrem oberen, dem Zulauf 1 und dem Kanalablauf 2 zugewandten Bereich geschlossen ist, d.h. nicht mit den Filteröffnungen 19 versehen ist, und die Filteröffnungen 19 lediglich in seinem unteren, dem Zulauf 1 und Kanalablauf 2 abgewandten Bereich vorgesehen sind. Prinzipiell ist auch möglich, dass die Filteröffnungen 19 ausschließlich am Boden des Filterkörpers 4 vorgesehen sind, wie dies beispielsweise in der unter Bezugnahme auf die in den Figuren 11 - 18 beschriebene Ausführungsform der Filtervorrichtung 20 der Fall ist.

Die Wasseroberfläche 10 wird durch Stauvorrichtungen 11, 12, die als Bleche, Kunststoffplatten, Betonmauern oder ähnliches ausgebildet sein können, vor den Abläufen 2 und 3 auf Niveau gehalten. Die Oberkante der Stauvorrichtung 11 zu dem Wasserspeicher 16 ist geringfügig tiefer gelegen als die Oberkante der Stauvorrichtung 12 zu dem Kanalablauf 2. Im vorliegenden Fall beträgt der Unterschied ca. 10 % des Rohrinnendurchmessers des Zulaufs 1. Der Filterkörper 4 ragt auf der dem Kanalablauf 2 zugewandten Seite über die Stauvorrichtung 12 und liegt dort auf.

Durch den Höhenunterschied der unterschiedlichen Stauvorrichtungen 11, 12, der in der Detailansicht von Fig. 6 deutlich zu erkennen ist, sowie durch die sich durch die Anordnung und den Sitz des Filterkörpers 4 ergebende Siphongeometrie, versucht das Wasser den Höhenversatz auszugleichen und fließt mit sehr geringem Druck nach unten in den Filterkörper 4 durch das obere Grobsieb 6, weiter durch die Kalksplittschicht 9, durch den Feinfilter 8, durch das stützende untere Lochblech 7, um danach zwischen den Außenseiten des Filterelementes 4 und der Innenseite der Seitenwände des mit Wasser gefüllten Wasserbehälters 5 wieder aufzusteigen, um über die tiefer gelegene Stauvorrichtung 11 durch einen der Nutzabläufe 3 zu einem der Wasserspeicher 16 abzulaufen.

Durch die insbesondere in der Draufsicht zu erkennende, lang gezogene Form des Filterkörpers 4 in Strömungsrichtung werden Gegenströmungen und Verwirbelungen an der Wasseroberfläche 10 minimiert, um das aufschwemmende organische Material in Richtung des Kanalablaufs 2 über die abgeflachte Seite des Filterkörpers 4 aufgrund des nachströmenden Wassers zu treiben, sodass dieses organische Material in das Kanalrohr 15 entsorgt werden kann.

Der Filterkörper 4 verdeckt bzw. verschließt die Nutzabläufe 3 der dem Wasserspeicher 16 zugewandten Seiten durch hochgezogene Ränder der Nutzabläufe 3 zu dem Wasserspeicher 16.

Wahlweise durch einzulegende oder fest verbaute Abstandshalter 17 am Boden des mit Wasser gefüllten Wasserbehälters 5 oder Füße 18 am Filterkörper 4 wird ein Absinken des Filterkörpers 4 verhindert und der korrekte Höhenstand desselben gewährleistet.

Das innere Filterelement 4 kann einschließlich des Grobfilters 6, des Lochblechs 7, der optionalen Kalksplittschicht 9 und des Feinfilters 8 komplett zu Reinigungs- und Reparaturzwecken oder zum Filterwechsel nach oben aus dem Wasserbehälter 5 entnommen werden. Zur Erleichterung des Aushebens des Filterkörpers 4 aus dem mit Wasser gefüllten Wasserbehälter 5 können an dem Filterkörper 4 Klappgriffe, Bügelgriffe, Haken, Bänder oder Klammervorrichtungen angebracht werden.

Die Herstellung des mit Wasser gefüllten Wasserbehälters 5 kann je nach Wasseraufkommen und Größe wahlweise aus Verbundwerkstoffen, Kunstoffen, Metallblechen, Beton oder gemauert und wasserdicht verputzt sein. Für die Herstellung des Filterkörpers 4 werden vorzugsweise dünnwandige Materialien wie Kunststoffe, Metallbleche, Siebe, Fliese, Gewebe oder Verbundmaterialien eingesetzt.

Die Filtervorrichtung 20 arbeitet wesentlich besser, wenn sie sehr genau gefertigt, montiert und aufgestellt wird, wobei das Aufstellen vorzugsweise mit einer Wasserwaage des mit Wasser gefüllten Wasserbehälters 5 mit dem inneren Filterkörper 4 insbesondere der Stauvorrichtungen 11, 12 erfolgt. Die Funktionsweise der Filtervorrichtung 20 ist abhängig vom Stand der Wasseroberfläche 10 in dem mit Wasser gefüllten Wasserbehälter 5 und des darin enthaltenen Filterkörper 4.

Die Figuren 11 bis 18 zeigen eine weitere Ausführungsform der Filtervorrichtung 20, welche vorzugsweise aus einem geeigneten Kunststoffmaterial besteht und beispielsweise durch ein Schleuder- oder Spritzgießverfahren hergestellt ist.

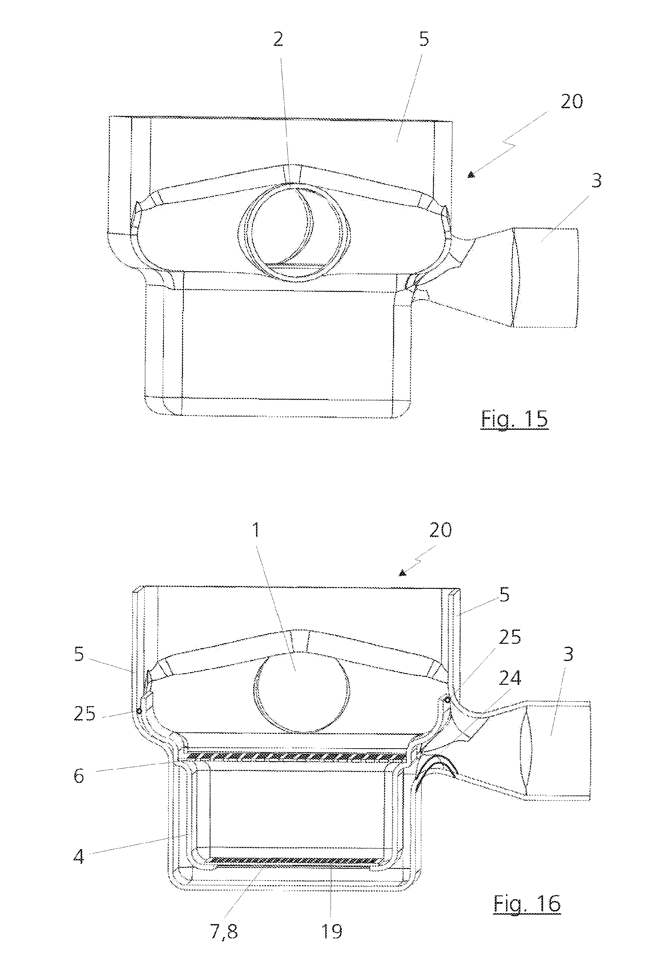

Bei dieser Ausführungsform sind der Zulauf 1 und die Abläufe 2 und 3 einteilig mit dem Wasserbehälter 5 ausgeführt. Auch der Filterkörper 4 besteht im Wesentlichen aus einem Teil, in das am Boden das Lochblech 7, gegebenenfalls mit dem Feinfilter 8, sowie auf einem höheren Niveau das Grobsieb 6 angeordnet sind. Des weiteren ist beispielsweise in Fig. 12 zu erkennen, dass der Filterkörper 4 eine mit der umlaufenden Wandung 22 des Wasserbehälters 5 verbundene Abdeckung 23 aufweist, die vorzugsweise gegenüber der umlaufenden Wandung 22 abgedichtet ist. Die Abdichtung kann je nach Herstellungsverfahren bei der Herstellung der Filtervorrichtung 20 erzeugt werden, wie dies beispielsweise im Spritzgießverfahren möglich ist, oder durch eine zusätzliche Dichtung 25 gebildet sein, wie dies beim Schleudergießverfahren der Fall sein kann. In Fig. 16 ist beispielhaft eine solche Dichtung 25 eingezeichnet.

Die Abdichtung, d. h. die Stelle, an welcher die Abdeckung 23 gegenüber dem Wasserbehälter 5 abgedichtet ist, befindet sich dabei vorzugsweise unterhalb des höchsten Punkts der unteren Kante des Nutzablaufs 3, welcher in Fig. 16 gut zu erkennen und mit dem Bezugszeichen 24 bezeichnet ist. Auf diese Weise wird gewährleistet, dass sich die Wasseroberfläche 10 stets oberhalb des Grobsiebs 6 befindet, so dass über den Zulauf 1 in den Filterkörper 4 gelangender Schmutz sich nicht auf dem Grobsieb 6 absetzen kann und in der Schwebe bzw. im Wasser gelöst bleibt. Die untere Kante 24 des Nutzablaufs 3 bestimmt somit also des niedrigst möglichen Wasserstand in den Wasserbehälter 5 bzw. in dem Filterkörper 4.

Mit den hierin beschriebenen Filtervorrichtungen 20 kann ein Verfahren zur Filterung von Wasser aus dem Dachablaufsystem 13 und/oder der Oberflächenentwässerungen 14 durchgeführt werden, bei dem das zu filternde Wasser über den Zulauf 1 in den Wasserbehälter 5 geleitet und über den Kanalablauf 2 zu dem Kanal 15 oder über den wenigstens einen Nutzablauf 3 zu dem wenigstens einen Wasserspeicher 16 geleitet wird und bei dem das zu dem Wasserspeicher 16 geleitete Wasser durch den in dem Wasserbehälter 5 angeordneten Filterkörper 4 geleitet wird.

## Patentansprüche

1. Filtervorrichtung (20) für Dachablaufsysteme (13) und/oder Oberflächenentwässerungen (14), mit einem Wasserbehälter (5), in den ein Zulauf (1) für zu filterndes Wasser mündet und von dem ein Kanalablauf (2) zu einem Kanal (15) und wenigstens ein Nutzablauf (3) zu einem Wasserspeicher (16) abgeht, mit einem in dem Wasserbehälter (5) angeordneten Filterkörper (4), wobei der Zulauf (1) in einen Innenraum (21) des Filterkörpers (4) mündet, und wobei der wenigstens eine Nutzablauf (3) von einem sich außerhalb des Filterkörpers (4) befindlichen Bereich des Wasserbehälters (5) abgeht.

2. Filtervorrichtung nach Anspruch 1,
**dadurch gekennzeichnet, dass** der wenigstens eine Nutzablauf (3) in einer geringeren Höhe angeordnet ist als der Kanalablauf (2).

3. Filtervorrichtung nach Anspruch 1 oder 2,
**dadurch gekennzeichnet, dass** der Filterkörper (4) im oberen, dem Zulauf (1) und dem Kanalablauf (2) zugewandten Bereich seiner Seitenwände geschlossen ist und in seinem unteren, dem Zulauf (1) und dem Kanalablauf (2) abgewandten Bereich seiner Seitenwände und/oder seines Bodens Filteröffnungen (19) aufweist.

4. Filtervorrichtung nach Anspruch 3,
**dadurch gekennzeichnet, dass** die Filteröffnungen (19) ausschließlich am Boden des Filterkörpers (4) vorgesehen sind.

5. Filtervorrichtung nach Anspruch 3 oder 4,
**dadurch gekennzeichnet, dass** der Filterkörper (4) in dem Bereich der Filteröffnungen (19) mit einer Kalksplittschicht (9) versehen ist.

6. Filtervorrichtung nach einem der Ansprüche 1 bis 5,
**dadurch gekennzeichnet, dass** der Filterkörper (4) eine mit einer umlaufenden Wandung (22) des Wasserbehälters (5) verbundene Abdeckung (23) aufweist, unterhalb welcher der wenigstens eine Nutzablauf (3) angeschlossen ist.

7. Filtervorrichtung nach Anspruch 6,
**dadurch gekennzeichnet, dass** die Abdeckung (23) gegenüber der umlaufenden Wandung (22) des Wasserbehälters (5) abgedichtet ist.

8. Filtervorrichtung nach einem der Ansprüche 1 bis 7,
**dadurch gekennzeichnet, dass** der Filterkörper (4) ein über im wesentlichen seinen gesamten Querschnitt verlaufendes Grobsieb (6) aufweist, welches unterhalb des wenigstens einen Nutzablaufs (3) angeordnet ist.

9. Filtervorrichtung nach Anspruch 8,
**dadurch gekennzeichnet, dass** das Grobsieb (6) in einem Abstand von 0,5 - 2 cm unterhalb des wenigstens einen Nutzablaufs (3) angeordnet ist.

10. Verfahren zur Filterung von Wasser aus Dachablaufsystemen (13) und/oder Oberflächenentwässerungen (14), wobei das zu filternde Wasser über einen Zulauf (1) in einen Wasserbehälter (5) geleitet und über einen Kanalablauf (2) zu einem Kanal (15) oder über wenigstens einen Nutzablauf (3) zu wenigstens einem Wasserspeicher (16) geleitet wird, und wobei das zu dem Wasserspeicher (16) geleitete Wasser durch einen in dem Wasserbehälter (5) angeordneten Filterkörper (4) geleitet wird.
